**Europäisches Patentamt**

(19) **European Patent Office**

**Office européen des brevets**

(11) Numéro de publication: **0 224 309**
**B1**

(12) **FASCICULE DE BREVET EUROPEEN**

(45) Date de publication du fascicule du brevet:
**07.02.90**

(21) Numéro de dépôt: **86202060.9**

(22) Date de dépôt: **20.11.86**

(51) Int. Cl.⁴: **A47L 9/28**, G05D 16/20

(54) **Aspirateur muni d'un dispositif de contrôle automatique d'aspiration.**

(30) Priorité: **22.11.85 FR 8517304**

(43) Date de publication de la demande:
**03.06.87 Bulletin 87/23**

(45) Mention de la délivrance du brevet:
**07.02.90 Bulletin 90/6**

(84) Etats contractants désignés:
**DE ES FR GB NL SE**

(56) Documents cités:
**DE-A- 3 307 006**
**FR-A- 2 197 555**
**GB-A- 2 046 037**
**US-A- 4 021 879**

(73) Titulaire: **LABORATOIRES D'ELECTRONIQUE PHILIPS, 3, Avenue Descartes, F-94450 Limeil-Brévannes(FR)**
(84) Etats contractants désignés: **FR**

(73) Titulaire: **N.V. Philips' Gloeilampenfabrieken, Groenewoudseweg 1, NL-5621 BA Eindhoven(NL)**
(84) Etats contractants désignés: **DE ES GB NL SE**

(72) Inventeur: **Hazan, Jean-Pierre Société Civile S.P.I.D., 209, rue de l'Université, F-75007 Paris(FR)**
Inventeur: **Steers, Michel Société Civile S.P.I.D., 209, rue de l'Université, F-75007 Paris(FR)**
Inventeur: **Courdille, Michel Société Civile S.P.I.D., 209, rue de l'Université, F-75007 Paris(FR)**

(74) Mandataire: **Landousy, Christian et al, Société Civile S.P.I.D. 209, Rue de l'Université, F-75007 Paris(FR)**

## Description

L'invention concerne un aspirateur à dépression d'air pour usage domestique ou professionnel, comprenant un ventilateur aspirant entrainé par un moteur électrique et un dispositif de mesure de la dépression du courant d'air de travail qui agit sur les moyens électriques de contrôle du moteur électrique, le dispositif de mesure comprenant un émetteur de lumière qui émet un faisceau lumineux vers un récepteur de lumière, le faisceau lumineux pouvant être intercepté par un dispositif mobile d'obturation dont le déplacement est déterminé par la différence de pression qui existe entre la pression atmosphérique PA et la pression du courant d'air de travail PT, le dispositif d'obturation se déplaçant dans une direction sous l'action de la force due à la différence de pression qui s'oppose à l'action d'une force de rappel agissant dans la direction opposée.

Une invention de ce genre est connue du brevet US 4 021 879 qui décrit un aspirateur muni de moyens de contrôle pour maintenir automatiquement un volume d'air circulant sensiblement constant pour des conditions variées de résistance au flux d'aspiration qui apparaît entre l'embout et le ventilateur aspirant. Ceci se présente en particulier lorsque le sac qui reçoit les poussières devient de plus en plus rempli. Ce dispositif utilise un préssostat muni d'un obturateur percé d'un trou qui laisse passer la lumière d'un émetteur de lumière vers un récepteur de lumière.

Un conduit prélève de l'air après le sac à poussière et après le ventilateur aspirant afin que la surpression qui y apparaît actionne le préssostat. De par sa nature celui-ci ne subit qu'un très faible déplacement et l'obturateur qui lui est solidaire ne présente d'une course de très faible amplitude. La dépression obtenue par l'aspirateur ne peut donc être réglée qu'entre deux valeurs extrêmes. De plus, si le sac à poussière vient à être percé, tout le système de mesure se remplit de la poussière accumulée.

Il n'est donc pas possible d'asservir finement la puissance d'aspiration de l'aspirateur en fonction du type d'usage ou du revêtement sur lequel il opère.

Or selon la nature des objets que l'on désire nettoyer par exemple des sols recouverts d'une moquette ou d'un matériau lisse, ou encore des rideaux, une puissance d'aspiration non contrôlée va présenter certains inconvénients. Il est pour cela très utile d'asservir cette puissance à l'intensité du courant d'air de travail.

Il apparaît un problème lorsque l'aspirateur a un conduit pratiquement obstrué et qu'il continue à opérer à pleine puissance ce qui peut provoquer une détérioration à la fois du matériel qui obstrue et de l'aspirateur lui-même. D'autre part les variations de puissance d'aspiration doivent pouvoir être progressives.

Un autre problème se présente lorsque l'aspirateur est laissé en fonctionnement mais sans être obstrué par quoique ce soit. Il faut alors que l'aspirateur se mette automatiquement dans un état de veille. Il faut de plus tendre à limiter la gêne sonore de l'utilisateur. Le dispositif de mesure doit également être assez bien protégé contre des ennuis liés aux poussières qui pourraient gêner son fonctionnement.

Le but de l'invention est donc d'obtenir un aspirateur permettant de résoudre ces problèmes à l'aide d'un dispositif de mesure peu onéreux et aisément industrialisable compte-tenu du domaine d'application.

Pour cela l'invention telle que définie dans le préambule est remarquable en ce que le dispositif mobile d'obturation comprend un volet mobile solidaire d'un piston mobile dans une enveloppe reliée au courant d'air de travail et à l'atmosphère, et lorsque la pression de travail PT est voisine de la valeur la plus faible Pm atteinte par l'aspirateur, le volet mobile intervient sur le flux lumineux transmis au récepteur, de sorte que le dispositif de mesure agit sur les moyens électriques pour réduire l'allure d'aspiration de l'aspirateur.

Préférentiellement le volet mobile est constitué d'une plaque dont les extrémités qui participent à l'interception du faisceau lumineux présentent un profil qui permet une interception progressive.

Pour les deux sens de déplacement de la plaque le profil selon l'une ou les deux extrémités va pouvoir être déterminé pour réaliser cette interception progressive. Ce profil progressif est permis grâce au déplacement important du piston mobile.

Lorsque l'aspirateur opère avec un conduit d'aspiration qui n'est pas en contact avec un object à nettoyer, la pression du courant d'air de travail PT est sensiblement égale à la pression atmosphérique PA.

De même, lorsque l'aspirateur opère avec un conduit d'aspiration obstrué, la pression du courant d'air de travail PT va être sensiblement égale à la valeur de pression la plus faible Pm que l'aspirateur peut atteindre selon ses capacités.

Selon l'invention on place donc le dispositif de mesure de telle sorte qu'il réagit à la différence de pression qui existe entre la pression de travail et la pression atmosphérique. Il est néanmoins placé à l'écart du trajet suivi par les poussières et les salissures qui sont entraînées par le conduit d'aspiration vers un sac receveur.

Lorsque l'aspirateur est en fonctionnement, mais en période d'attente d'être utilisé, la pression de travail PT est voisine de la pression atmosphérique. Selon un mode de réalisation de l'invention le dispositif de mesure réduit automatiquement l'allure d'aspiration de l'aspirateur en intervenant sur les moyens électriques. Pour cela le volet mobile en se déplaçant dans le trajet du faisceau lumineux modifie le flux lumineux transmis au récepteur.

De même, lorsque l'aspirateur a un conduit pratiquement obstrué, en particulier par un rideau ou une moquette, la pression minimale de travail PT est voisine de la valeur minimale Pm atteinte par l'aspirateur. Pour éviter de détériorer les rideaux ou autres, et pour diminuer le bruit de l'aspirateur, selon l'invention, le dispositif de mesure réduit automatiquement l'allure d'aspiration de l'aspirateur en intervenant sur les moyens électriques. Pour cela le volet mobile en se déplaçant dans le trajet du faisceau lumineux modifie le flux lumineux transmis au récepteur.

Lorsque PT est voisine de PA ou de Pm, le flux lumineux est modifié pour réduire l'allure d'aspiration. Cette modification peut opérer soit en réduisant le flux lumineux soit en l'augmentant selon que les moyens électriques opèrent dans l'un ou l'autre cas.

Ainsi selon un exemple préférentiel, l'émetteur de lumière est constitué d'une diode électroluminescente, le récepteur de lumière est une photorésistance dont la résistance décroît lorsque l'intensité lumineuse qu'il reçoit augmente, et les moyens électriques sont constitués d'un circuit muni d'un triac. La gachette de ce triac est commandée par le récepteur de lumière, le triac commandant le courant fourni au moteur électrique.

Dans ce cas lorsque la pression de travail PT passe d'une valeur située dans la gamme utile, correspondant à un état de travail normal, à une pression voisine de PA, le piston mobile, qui se trouvait être aspiré par la dépression, est repoussé par le ressort de rappel de sorte que dans le premier état le flux lumineux était totalement ou presque totalement intercepté et dans le second état le flux lumineux est totalement ou presque totalement non-intercepté par le volet mobile. La section d'interception du volet mobile est donc grande dans le premier état et faible dans le second. Le volet est par exemple constitué d'une plaque ou autres présentant une grande surface d'interception dans l'état de travail normal et une petite surface d'interception dans l'état de travail d'attente.

Lorsque la pression de travail PT passe d'une valeur située dans la gamme utile, correspondant à l'état de travail normal, à une pression voisine de Pm, le piston mobile est alors plus fortement aspiré. Il entraine avec lui le volet mobile de sorte que d'un premier état où il intercepte totalement ou presque totalement le flux lumineux, il se déplace vers un deuxième état où il libère totalement ou presque totalement le flux lumineux.

Le volet est par exemple constitué d'une plaque ou autres présentant une grande surface d'interception dans l'état de travail normal et une petite surface d'interception dans l'état de travail consécutif à une obstruction.

Pour opérer dans l'état de travail normal et dans les états d'attente et d'obstruction, le volet est constitué d'une plaque ou autres qui comprend deux sections d'interception faible encadrant une section d'interception élevée.

Dans le cas où le détecteur est une photorésistance, celle-ci passe d'une valeur de résistance élevée à une valeur faible. Les moyens électriques, comprenant un triac, agissent sur la gâchette du triac pour fournir au moteur électrique une puissance réduite, ce qui réduit l'allure d'aspiration de l'aspirateur.

Il est évidemment possible d'inverser l'intensité du flux lumineux entre l'état de travail normal et les deux états extrêmes. Ainsi le flux lumineux transmis peut être maximal pour l'état de travail normal et minimal lorsque l'aspirateur est en situation d'attente ou en situation d'obstruction.

Dans ce second mode la plaque comprend deux sections d'interception élevée encadrant une section d'interception faible.

Il est évidemment possible d'utiliser un phototransistor ou une photodiode comme récepteur de lumière.

L'invention sera mieux comprise à l'aide des dessins suivants, donnés à titre d'exemples non limitatifs qui représentent :

figure 1 : une représentation d'un aspirateur muni d'un dispositif d'obturation mobile selon l'invention,

figure 2 : une représentation de deux exemples de volet mobile,

figure 3 : une représentation des positions relatives de l'émetteur, du récepteur et du volet mobile.

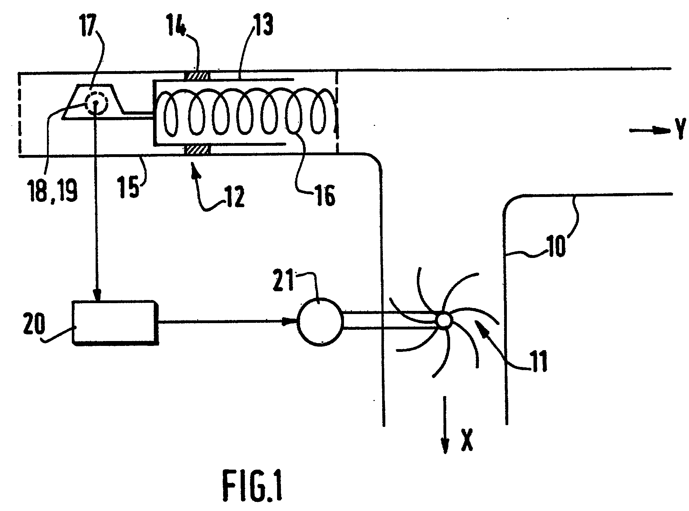

Sur la figure 1 sont représentés le conduit d'aspiration 10 dans lequel un ventilateur aspirant 11, actionné par un moteur électrique 21, assure une dépression. Un sac pour la collecte des poussières est placé dans la direction X. L'embout d'aspiration utilisé par l'utilisateur se trouve dans la direction Y. Le dispositif d'obturation mobile 12 est placé en dérivation sur ce conduit d'aspiration 10.

Il présente deux extrémités non complètement fermées qui permettent à l'une de mettre l'intérieur du piston 13 du dispositif en liaison avec le courant d'air de travail et à l'autre de mettre l'extérieur du piston 13 en contact avec la pression atmosphérique. Cette disposition peut être inversée. Un joint d'étanchéité 14 permet au piston 13 de coulisser à frottements doux à l'intérieur de l'enveloppe 15. Ce joint peut également servir de guide. Lorsque la pression est faible dans le conduit d'aspiration le piston 13 est aspiré dans la direction Y. Il comprime alors un ressort 16 et entraine avec lui un volet mobile 17 qui peut ainsi intercepter un flux lumineux émis d'un émetteur de lumière 18 vers un récepteur lumière 19. Sur la figure 1, le flux lumineux est supposé être perpendiculaire au plan de la figure. L'émetteur 18 et le récepteur 19 sont solidaires de l'enveloppe 15.

Selon un mode de réalisation préférentiel, le volet mobile 17 est constitué d'une plaque placée sensiblement perpendiculairement au faisceau. Dans un état de travail normal, c'est-à-dire lorsque l'aspirateur n'est ni obstrué, ni en régime d'aspiration directe de l'air ambiant, le volet 17 intercepte le faisceau. La force du ressort est déterminée en conséquence. Dans ce cas lorsque l'embout d'aspiration est obstrué, le piston 13 se déplace dans la direction Y et le volet mobile 17 libère le faisceau lumineux. Le récepteur, par exemple une photorésistance, reçoit le flux lumineux et la valeur de cette résistance décroît. Cette photorésistance actionne la gâchette d'un triac des moyens électriques 20 qui contrôlent le moteur électrique 21 du ventilateur aspirant. Ce contrôle consiste à réduire l'allure d'aspiration en réduisant la vitesse du moteur, ce qui a pour effet de diminuer le bruit et d'assurer une plus grande longévité au moteur. Une obstruction de l'embout peut être constituée par des rideaux qui sont trop fortement aspirés ou par un sol avec un revêtement textile ou similaire. En réduisant l'allure la dépression devient sensiblement plus faible et le volet est alors sollicité par le ressort 16. Le profil du volet mobile 17 et la force du ressort permettent de régler le point de fonctionnement désiré.

Dans le cas où l'embout aspirant est relié directement à l'air ambiant, la pression atmosphérique règne sensiblement des deux cotés du piston mobile 13. Il est alors sollicité par le ressort 16 pour être repoussé dans la direction opposée à la direction Y. Par le même mécanisme que précédemment le volet mobile 17 libère le faisceau lumineux et une réduction d'allure analogue au cas précédent s'effectue. Ainsi l'aspirateur peut opérer dans un mode d'attente moins bruyant, ce qui lui assure une plus grande longévité.

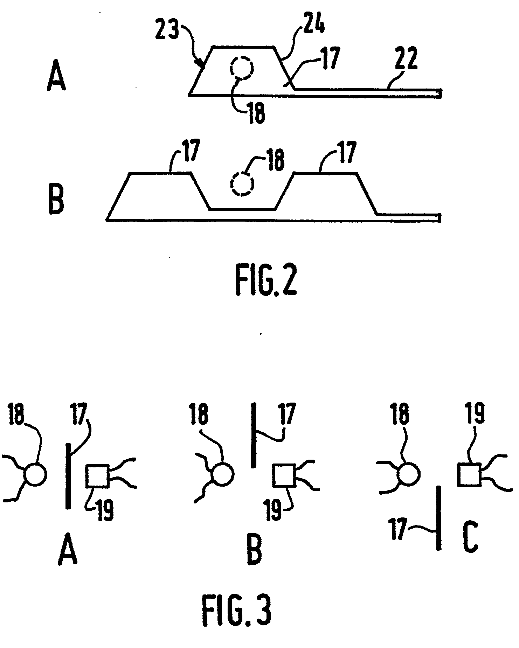

La figure 2 représente deux exemples de réalisation de volet mobile. La figure 2A montre un volet mobile formé d'une plaque réunie par une tige 22 au piston mobile. Cette plaque présente des bords 23, 24 dont le profil peut être ajusté pour contrôler l'intensité du flux lumineux qu'ils interceptent. Selon la disposition de la figure 2A, la plaque 17 laisse passer le flux lumineux, à droite et à gauche. Elle présente donc une surface d'interception maximale encadrée par des surfaces d'interception plus faible.

Le déplacement important du piston permet de donner à la plaque le profil d'interception progressif souhaité qui permet d'ajuster la puissance d'aspiration.

La figure 2B montre un autre exemple de réalisation avec une surface d'interception minimale encadrée par deux surfaces d'interception maximale.

La figure 3 donne une représentation des positions relatives de l'émetteur, du récepteur et du volet mobile. Lorsque le volet mobile 17 intercepte le faisceau, il se trouve dans la position représentée sur la figure 3A. Lorsqu'il libère le faisceau, par exemple en situation d'obstruction, il se trouve dans la position représentée par la figure 3B. Dans ce cas lorsqu'il libère le faisceau en situation d'attente, il se trouve dans la position représentée par la figure 3C.

L'invention vient d'être décrite avec un volet mobile constitué d'une plaque comprenant deux paliers. Cette solution présente l'avantage d'être simple et donc peu onéreuse ce qui est important pour des matériels à usage domestique. Il est possible de lui donner une toute autre forme sans sortir du cadre de l'invention. Par exemple il est possible de décomposer la plaque en un plus grand nombre de paliers, afin de permettre à l'aspirateur d'opérer avec des degrés multiples de pressions d'aspiration, afin de l'adapter à un nombre plus élevé de conditions de fonctionnement.

**Revendications**

1. Aspirateur à dépression d'air pour usage domestique ou professionnel, comprenant un ventilateur aspirant (11) entraîné par un moteur électrique (21) et un dispositif de mesure de la dépression du courant d'air de travail qui agit sur les moyens électriques (20) de contrôle du moteur électrique (21), le dispositif de mesure comprenant un émetteur de lumière (18) qui émet un faisceau lumineux vers un récepteur de lumière (19), le faisceau lumineux pouvant être intercepté par un dispositif mobile d'obturation (17) dont le déplacement est déterminé par la différence de pression qui existe entre la pression atmosphérique PA et la pression du courant d'air de travail PT, le dispositif d'obturation (17) se déplaçant dans une direction sous l'action de la force due à la différence de pression qui s'oppose à l'action d'une force de rappel (16) agissant dans la direction opposée, caractérisé en ce que le dispositif mobile d'obturation comprend un volet mobile (17) solidaire d'un piston (13) mobile dans une enveloppe (15) reliée au courant d'air de travail et à l'atmosphère et lorsque la pression de travail PT est voisine de la valeur la plus faible Pm atteinte par l'aspirateur, le volet mobile (17) intervient sur le flux lumineux transmis au récepteur (19), de sorte que le dispositif de mesure agit sur les moyens électriques (20) pour réduire l'allure d'aspiration de l'aspirateur.

2. Aspirateur selon la revendication 1, caractérisé en ce que le volet mobile est constitué d'une plaque dont les extrémités qui participent à l'interception du faisceau lumineux présentent un profil qui permet une interception progressive.

3. Aspirateur selon une des revendications 1 ou 2, caractérisé en ce que, lorsque la pression de travail PT est voisine de la pression atmosphérique PA, le volet mobile intervient sur le flux lumineux transmis au récepteur, de sorte que le dispositif de mesure agit sur les moyens électriques pour réduire l'allure d'aspiration de l'aspirateur.

4. Aspirateur selon une des revendications 1 à 3, caractérisé en ce que l'intervention du volet mobile consiste à augmenter le flux lumineux transmis.

5. Aspirateur selon une des revendications 1 à 3, caractérisé en ce que l'intervention du volet mobile consiste à diminuer le flux lumineux transmis.

6. Aspirateur selon la revendication 4, caractérisé en ce que le volet mobile est constitué d'une plaque qui présente une surface d'interception maximale dans la partie centrale de la plaque, encadrée par des surfaces à interception plus faible.

7. Aspirateur selon la revendication 5, caractérisé en ce que le volet mobile est constitué d'une plaque qui présente une surface d'interception minimale dans la partie centrale, encadrée par des surfaces à interception plus élevée.

8. Aspirateur selon une des revendications 1 à 7, caractérisé en ce que le récepteur de lumière est une photorésistance ou un phototransistor ou une photodiode.

9. Aspirateur selon une des revendications 1 à 8, caractérisé en ce que l'émetteur de lumière est une diode électroluminescente.

**Claims**

1. An air-vacuum cleaner for domestic or professional use, comprising a suction fan (11) driven by an electric motor (21) and a measurement device for measuring the reduced pressure in the stream of working air, which measurement device influences electrical control means (20) for the electric motor (21) and comprises a light emitter (18) which emits a light beam towards a light receiver (19), which light beam can be intercepted by a movable shutter device (17) whose movement is governed by the pressure difference between the atmospheric pressure PA and the pressure of the stream of working air PT, the shutter device (17) being moved in one direction under the influence of the force produced by the pressure difference which is opposed to the action of a return force (16) which acts in the opposite direction, characterized in that the movable shutter device comprises a movable shutter (17) which is fixedly connected to a piston (13) which is movable in a housing (15) which communicates with the stream of working air and with the atmosphere and, when the operating pressure PT is close to the smallest value Pm attainable by the vacuum cleaner, the movable shutter (17) influences the luminous flux emitted towards the receiver (19) in such a way that the measurement device influences the electrical means (20) to reduce the suction rate of the vacuum cleaner.

2. A vacuum cleaner as claimed in Claim 1, characterized in that the movable shutter is constituted by a plate whose ends which assist in intercepting the light beam have a profile which enable a gradual interception to be achieved.

3. A vacuum cleaner as claimed in Claim 1 or 2, characterized in that when the operating pressure PT is close to the atmospheric pressure PA the movable shutter influences the luminous flux emitted towards the receiver in such a way that the measurement device influences the electrical means so as to reduce the suction rate of the vacuum cleaner.

4. A vacuum cleaner as claimed in any one of the Claims 1 to 3, characterized in that the influence exerted by the movable shutter is to increase the transmitted luminous flux.

5. A vacuum cleaner as claimed in any one of the Claims 1 to 3, characterized in that the influence exerted by the movable shutter is to reduce the transmitted luminous flux.

6. A vacuum cleaner as claimed in Claim 4, characterized in that the movable shutter is constituted by a plate having an area of maximum interception in the central part of the plate, surrounded by areas of lower interception.

7. A vacuum cleaner as claimed in Claim 5, characterized in that the movable shutter is constituted by a plate having an area of minimal interception in the central part of the plate, surrounded by areas of higher interception.

8. A vacuum cleaner as claimed in any one of the Claims 1 to 7, characterized in that the light receiver is a photoresistor or a phototransistor or a photodiode.

9. A vacuum cleaner as claimed in any one of the Claims 1 to 8, characterized in that the light emitter is a light-emitting diode.

## Patentansprüche

1. Staubsauger für Haushalt- oder professionellen Gebrauch mit einem durch einen Elektromotor (21) angetriebenen Saugventilator (11) und mit einer Meßvorrichtung zum Messen der Verringerung des Arbeitsluftstromes, der die elektrischen Mittel (20) zur Steuerung des Elektromotors (21) beeinflußt, wobei die Meßvorrichtung einen Lichtsender (18) aufweist, der einen Lichtstrahl in Richtung eines Lichtempfängers (19) aussendet, wobei der Lichtstrahl durch eine bewegliche Abblendvorrichtung (17) abgefangen werden kann, deren Verschiebung durch den Druckunterschied zwischen dem atmosphärischen Druck PA und dem Druck des Arbeitsluftstromes PT bestimmt wird, wobei die Abblendvorrichtung (17) sich in einer Richtung bewegt, und zwar unter dem Einfluß der durch den Druckunterschied verursachten Kraft, die der Wirkung einer Rückwärtskraft (16) entgegengesetzt ist, die sich in der entgegengesetzten Richtung auswirkt, dadurch gekennzeichnet, daß die bewegliche Abblendvorrichtung eine bewegliche Klappe (17) aufweist, die einen Teil eines beweglichen Kolbens (13) in einer Hülle (15) bildet, die mit dem Arbeitsluftstrom und mit der Atmosphäre verbunden ist, und daß wenn der Arbeitsdruck PT sich dem durch den Staubsauger erreichten niedrigeren Wert PW nähert, die bewegliche Klappe (17) sich in den zum Empfänger (19) ausgestrahlten Lichtstrom schiebt, und zwar derart, daß die Meßvorrichtung die elektrischen Mittel (20) betätigt zum Verringern der Saugkraft des Staubsaugers.

2. Staubsauger nach Anspruch 1, dadurch gekennzeichnet, daß die bewegliche Klappe aus einer Platte besteht, deren Ränder, die sich an dem Abfangen des Lichtstrahles beteiligen, ein Profil aufweisen, das ein progressives Abfangen ermöglicht.

3. Staubsauger nach einem der Ansprüche 1 oder 2, dadurch gekennzeichnet, daß wenn der Arbeitsdruck PT in der Nähe des atmosphärischen Druckes PA ist, die bewegliche Klappe den zum Empfänger ausgesendeten Lichtstrahl derart abfängt, daß die Meßvorrichtung die elektrischen Mittel zum Verringern der Saugkraft des Staubsaugers betätigt.

4. Staubsauger nach einem der Ansprüche 1 bis 3, dadurch gekennzeichnet, daß die Zwischenkunft der beweglichen Klappe zu einer Zunahme des ausgestrahlten Lichtes führt.

5. Staubsauger nach einem der Ansprüche 1 bis 3, dadurch gekennzeichnet, daß die Zwischenkunft der beweglichen Klappe zu einer Verringerung des ausgestrahlten Lichtes führt.

6. Staubsauger nach Anspruch 4, dadurch gekennzeichnet, daß die bewegliche Klappe aus einer Platte besteht, die in ihrer Mitte eine maximale Abfangoberfläche aufweist, die durch schwächere Abfangoberflächen umgeben ist.

7. Staubsauger nach Anspruch 5, dadurch gekennzeichnet, daß die bewegliche Klappe aus einer Platte besteht, die in ihrer Mitte eine minimale Abfangoberfläche aufweist, die durch stärkere Abfangoberflächen umgeben ist.

8. Staubsauger nach einem der Ansprüche 1 bis 7, dadurch gekennzeichnet, daß der Lichtempfänger ein Photowiderstand, ein Phototransistor oder eine Photodiode ist.

9. Staubsauger nach einem der Ansprüche 1 bis 8, dadurch gekennzeichnet, daß der Lichtsender eine Leuchtdiode ist.

FIG.1

FIG.2

FIG.3